# EUROPÄISCHE PATENTSCHRIFT

(11) **EP 4 040 942 B1**
(45) Veröffentlichungstag und Bekanntmachung des Hinweises auf die Patenterteilung: **04.12.2024**
(21) Anmeldenummer: 20793574.3
(22) Anmeldetag: 06.10.2020
(51) Int. Cl.: A01D 57/04, A01D 41/14

(54) **SCHNEIDWERK MIT MEHRTEILIGER HÖHENVERSTELLBARER HASPEL**
CUTTING DEVICE WITH MULTIPLE-PIECE HEIGHT-ADJUSTABLE REEL
DISPOSITIF DE COUPE AVEC RABATTEUR MULTI-PIÈCES RÉGLABLE EN HAUTEUR

(30) Priorität: 11.10.2019 DE 102019127506
(43) Veröffentlichungstag der Anmeldung: 17.08.2022
(73) Patentinhaber: Carl Geringhoff GmbH & Co. KG, 59227 Ahlen (DE)
(72) Erfinder: SUDHUES, Steffen, 59227 Ahlen (DE); POKRIEFKE, Michael, 27798 Hude (DE)
(74) Vertreter: Weeg, Thomas
(86) Internationale Anmeldenummer: PCT/EP2020/077910
(87) Internationale Veröffentlichungsnummer: WO 2021/069397

(56) Entgegenhaltungen:
- DE-A1- 102015 109 191
- DE-A1- 102017 113 775
- DE-A1- 2 152 279
- JP-A- 2012 060 971

## Beschreibung

Die vorliegende Erfindung bezieht sich auf ein Schneidwerk zum Anbau an eine Erntemaschine nach dem Oberbegriff des Anspruchs 1.

Wenn in dieser Beschreibung von "vorne" und "hinten" die Rede ist, so werden diese Begriffe immer bezogen auf die Arbeitsrichtung des Schneidwerks verwendet. Die Arbeitsrichtung ist die Richtung, in die das Schneidwerk bewegt wird, um Erntegut zu schneiden.

Aus der Schrift DE 10 2015 109 191 A1 ist ein Schneidwerk bekannt, das aus mehreren Rahmenteilen zusammengesetzt ist, die sich jeweils über eine Teilarbeitsbreite erstrecken, und die gelenkig um eine sich zumindest annähernd in Arbeitsrichtung des Schneidwerks erstreckende Achse miteinander verbunden sind. In dem in dieser Schrift gezeigten Ausführungsbeispiel ist ein mittleres Rahmenteil offenbart, das mit zwei seitlichen Rahmenteilen gelenkig verbunden ist. Das in dieser Schrift offenbarte Schneidwerk kann Förderflächen aufweisen, die durch umlaufend angetriebene Förderbänder eines Draper-Schneidwerks gebildet sind, die das geschnittene Erntegut von dem jeweiligen Schnittpunkt am Messerbalken als Schneidelement zu einer mittigen und rückwärtig angeordneten Abgabestelle abfördern. Die Förderbänder bilden auf diese Weise gleichzeitig Förderorgane aus, und die Förderfläche und die nach oben gewandte Oberfläche der Förderorgane befinden sich in einer identischen Ebene. Anstelle von Förderbändern kann das Schneidwerk auch einen starren Blechboden als Schneidwerksmulde aufweisen, die die Förderfläche definiert und über die das geschnittene Erntegut mit einer Förderschnecke als Förderorgan abgefördert wird.

Als Förderorgan ist insbesondere eine dreiteilige höhenverstellbare Haspel offenbart. Die drei Haspelteile sind von vier Haspeltragarmen gehalten, die verschwenkbar mit dem Rahmen verbunden und an denen Hydraulikzylinder als Verstellmotoren zur Verstellung der Höhenlage der Haspeltragarme und damit der Haspelteile in vertikaler Richtung angreifen. Um einen Gleichlauf bei der Höhenverstellung der Haspeltragarme zu erzielen, sind die Hydraulikzylinder auf die dort offenbarte Weise in einem Hydraulikkreislauf miteinander verschaltet. Das Hydrauliksystem ist aber insgesamt vergleichsweise aufwendig. Es ist ein Ziel der Erfindung, die Herstellungskosten für ein gattungsgemäßes Schneidwerk zu verringern.

In der Schrift DE 10 2017 113 775 A1 ist ebenfalls ein dreiteiliges Schneidwerk mit einer dreigeteilten Haspel offenbart. Hier wird darauf hingewiesen, dass die Förderschnecke im äußeren Rahmenteil bei Verschwenkungen eines äußeren Rahmenteils zum mittleren Rahmenteil in axialer Richtung längenveränderlich ausgebildet sein sollte, um eine bessere Förderleistung ohne einen bereichsweisen Materialaufbau auf der Förderfläche zu erhalten. Wie eine Haspel mit mehreren Haspelteilen an solche Schwenkbewegungen anpassbar sein könnte, ohne dafür einen zu hohen baulichen und finanziellen Aufwand zu betreiben, lässt sich dieser Schrift nicht entnehmen.

Es ist die Aufgabe der vorliegenden Erfindung, die Förderleistung des Schneidwerks bei niedrigeren Kosten zu erhöhen.

Die Aufgabe wird für ein gattungsgemäßes Schneidwerk durch die kennzeichnenden Merkmale des Anspruchs 1 gelöst.

Die Torsionswelle verbindet mindestens zwei Haspeltragarme drehfest miteinander, so dass die Schwenkbewegung dieser beiden Haspeltragarme nicht mehr aufeinander abgestimmt werden muss. Durch nur einen einzigen Verstellantrieb, wie beispielsweise einen Hydraulikzylinder, werden gleichzeitig mindestens zwei Haspeltragarme in ihrer Höhe verstellt. Das Haspelteil, das von diesen beiden Haspeltragarmen gehalten ist, bewegt sich mit seinen beiden Enden immer gleichsinnig und um dieselben Winkelgrade aufwärts und abwärts. Wenn die Torsionswellen benachbarter Haspelteile drehfest miteinander verbunden sind, kann der eine Verstellantrieb ausreichen, um zumindest zwei Haspelteile in der Höhe zu verstellen, indem die Drehbewegung einer Torsionswelle auf die andere Torsionswelle übertragen wird und dadurch die mit dieser Torsionswelle drehfest verbundenen Haspeltragarme ebenfalls gleichsinnig und gleich weit in ihrer Höhe verstellt werden. Der zur Absicherung eines Gleichlaufs der ein oder mehrere Haspelteile tragenden Haspeltragarme betriebene Bauaufwand kann dadurch entfallen oder zumindest erheblich reduziert werden.

Die Lagerung einer Torsionswelle in axialer Richtung ist problematisch, weil die Torsionswelle in einer Höhe angeordnet ist, in der sie zur Achse, um die benachbarte Rahmenteile des Schneidwerks zueinander verschwenken, in vertikaler Richtung einen Abstand aufweist. Durch den vertikalen Abstand der Torsionswelle zur Achse und den Kreisbogen, um den das Rahmenteil relativ zum benachbarten Rahmenteil verschwenkt, ergeben sich bei unterschiedlichen Schwenkstellungen relative Längendifferenzen zwischen den Enden des Rahmenteils und dem Ende der Torsionswelle, wenn die Torsionswelle den Bewegungen des Rahmenteils folgen soll und auf beiden Seiten einen in axialer Richtung der Torsionswelle fixen Lagerpunkt aufweist. Indem die Torsionswelle auf einer ersten Seite einen in axialer Richtung der Torsionswelle fixen Lagerpunkt aufweist und auf einer zweiten Seite in einem Gleitlager gelagert ist, kann sich die Torsionswelle in axialer Richtung im Verhältnis zu dem Rahmenteil, dem das Haspelteil zumindest teilweise zugeordnet ist, bewegen. Mit dem Gleitlager ist ein Lager gemeint, das eine Schubbewegung zwischen der Torsionswelle und dem Rahmenteil zulässt, auf dem das Gleitlager montiert ist. Das Gleitlager kann aus Gleitflächen bestehen, die zumindest bereichsweise an die Umfangsform der Torsionswelle angepasst sind. So können beispielsweise Kunststoffschalen als Gleitlager verwendet werden. Es können aber auch Rollen- oder Kugellager verwendet werden, die die Relativbewegung zwischen der Torsionswelle und dem Rahmenteil zulassen. Das Haspelteil ist dadurch unabhängig von der Schwenkstellung des Rahmenteils zu einem benachbarten Rahmenteil spannungsfrei gehalten und kann sich dadurch Schwenkbewegungen des zugeordneten Rahmenteils besser anpassen. Der auf einer ersten Seite in axialer Richtung der Torsionswelle fixe Lagerpunkt kann in einem fixen Lager, einem Kugel- oder Kreuzgelenk, einem Getriebe oder dergleichen bestehen. Ein Kugel- oder Kreuzgelenk kann die Torsionswelle mit einer benachbarten Torsionswelle eines benachbarten Haspelteils verbinden.

Nach einer Ausgestaltung der Erfindung tragen ein oder mehrere innen gelegene Haspeltragarme mehrere Haspelteile. Bei beispielsweise zwei Haspelteilen einer Haspel trägt der mittlere Haspeltragarm die nach innen weisenden Wellenstummel der Haspelwellen der beiden Haspelteile, bei drei Haspelteilen tragen die beiden inneren Haspeltragarme jeweils den nach innen weisenden Wellenstummel der außen liegenden Wellenteile sowie einen der beiden Wellenstummel des mittleren Haspelteils. Dadurch kann die Zahl der verbauten Haspeltragarme reduziert werden. Indem nur der mittlere, einer der beiden mittleren Haspeltragarme oder beide mittleren Haspeltragarme mit einem Verstellantrieb höhenverstellbar ausgestaltet sind, können zwei oder drei Haspelteile mit nur einem oder zwei Verstellantrieben in ihrer Höhenlage verstellt werden. Die Zahl der eingesetzten Hydraulikventile und der im Schneidwerk zu verlegenden Druckleitungen sowie deren Länge werden erheblich reduziert.

Nach einer Ausgestaltung der Erfindung greift ein Verstellantrieb an einem innenliegenden Haspeltragarm an. Durch die mehr innen liegende Anordnung des Verstellantriebs wird der Rahmen entlastet. Ein an der Außenseite eines Schneidwerks angeordneter Verstellantrieb würde den Anbaurahmen des Schneidwerks mit einer über die halbe Arbeitsbreite des Schneidwerks wirkenden Hebelkraft mit seinem Gewicht belasten, das noch durch dynamische Schwingungsbewegungen des Schneidwerks zusätzlich verstärkt werden könnte. Ein weiterer Vorteil ist darin zu sehen, dass die äußeren Enden des Schneidwerks mehr freien Bauraum für Antriebe und Lager anderer Komponenten des Schneidwerks haben, wie beispielsweise für Förderschnecken, Bandförderer, Schneidelemente und dergleichen. Der Verstellantrieb kann auf der Rückseite des Schneidwerks angeordnet sein, und er kann an einer Lasche angreifen, die über den Umfang der Torsionswelle hervorsteht und die mit der Torsionswelle und/oder dem Haspeltragarm verbunden ist.

Nach einer Ausgestaltung der Erfindung sind einer oder mehrere Haspeltragarme als ein entlang der Arbeitsbreite elastisch federndes Element ausgebildet. Üblicherweise bestehen Haspeltragarme aus starren und im Wesentlichen unelastischen Rohren oder Profilen. Indem die Haspeltragarme als ein elastisch federndes Element hergestellt sind, können sie einen axialen Versatz entlang der Arbeitsbreite des Schneidwerks zwischen der Haspelwelle eines Haspelteils und der Torsionswelle, an der die Haspeltragarme drehfest befestigt sind, leicht durch eine elastische Federbewegung ohne eine bleibende Verformung in die Versatzrichtung ausgleichen. Das elastisch federnde Element ist dabei von seiner Bauteildimensionierung - der Materialauswahl, Materialdicke und Steghöhe - her so ausgelegt, dass es mit seiner Elastizität die möglichen Versatzwege eines Haspelteils in Relation zum zugehörigen Rahmenteil ohne eine bleibende Verformung aufnehmen kann. Dabei baut das elastisch federnde Element Rückstellkräfte auf, durch die sich das elastisch federnde Element wieder in die Normallage zurückbewegt, wenn der axiale Versatz zwischen der Torsionswelle und der Haspelwelle entfällt. Das elastisch federnde Element ist dabei so in das Schneidwerk eingebaut, dass die plane Fläche des elastisch federnden Elements den Haspelteilen zugewandt ist und die entsprechend dünne Materiallage des elastisch federnden Elements eine seitliche Federbewegung zulässt. Der Steg des elastisch federnden Elements ist in einer zumindest annähernd vertikalen Ausrichtung angeordnet, so dass das elastisch federnde Element in der vertikalen Richtung das Gewicht der von ihm getragenen Haspelteile trägt, ohne dabei größere elastische Federbewegungen auszuführen. Das elastisch federnde Element kann beispielsweise aus einem metallischen Werkstoff, beispielsweise einem Federstahl, oder einem Kunststoff, der auch faserverstärkt sein kann, hergestellt sein, der ein den Anforderungen entsprechendes Federverhalten zeigt. Es kann ausreichen, bei einer Haspel mit drei Haspelteilen nur die beiden äußeren Haspelträgerarme als elastisch federnde Elemente auszubilden, weil die unterschiedlichen einstellbaren Höhenunterschiede zwischen der Haspelwelle und dem Torsionsrohr in Verbindung mit dem Anwinkeln oder Abfallen der Seitenrahmen nur hier zu einer Relativbewegung führen.

Nach einer Ausgestaltung der Erfindung dient die Torsionswelle als Halterung zur Befestigung der Rückwand des Schneidwerks. Da sich die Torsionswelle an der Rückseite des Schneidwerks in einem vertikalen Abstand zur Förderfläche über eine Teilarbeitsbreite des Schneidwerks erstreckt, ist es möglich, die Torsionswelle zu nutzen, um daran die Rückwand des Schneidwerks zu befestigen. Die Rückwand kann als ein einfaches Blech ausgestaltet werden, das den Förderweg des Ernteguts von den Schneidelementen zur Abgabestelle nach hinten seitlich begrenzt und gegen Gutverluste absichert. Nach oben hin kann das obere Ende der Rückwand des Schneidwerks an der Torsionswelle abgestützt werden. Dadurch können zusätzliche Bauteile entfallen, und das Gewicht des Schneidwerks wird gesenkt.

Nach einer Ausgestaltung der Erfindung weist die Haspel drei Haspelteile auf, von denen die beiden äußeren Haspelteile über ein jeweiliges Haspeltragwerk abgestützt sind, zumindest eines der beiden Haspeltragwerke ist mit einem Verstellantrieb in seiner Höhe verstellbar und die beiden Haspeltragwerke sind über eine drehfest mit diesen verbundene Zwischenwelle in ihren Verstellbewegungen miteinander synchronisiert. Die Zwischenwelle ist eine mechanisch einfache, aber hoch belastbare und kostengünstige Möglichkeit, die Bewegungen miteinander zu synchronisieren. Die Haspel mit allen drei Haspelteilen bewegt sich dann immer gleichsinnig mit gleichen Hubwegen. Die drehfeste Verbindung der äußeren Torsionswellen mit der Zwischenwelle kann beispielsweise über Kardangelenke erfolgen, damit die seitlichen Rahmenteile im Verhältnis zum mittleren Rahmenteil auf- und abwärts schwenken können, um sich einer unebenen Bodenkontur anzupassen. Die Torsionswellen können so den Schwenkbewegungen der Rahmenteile folgen. Das Kardangelenk bildet dann die Schwenkachse der Torsionswellen zur Zwischenwelle.

Nach einer Ausgestaltung der Erfindung ist der Verstellantrieb als hydraulischer Antrieb ausgebildet, dessen Hydraulikkreislauf über Hydraulikventile verriegelbar ist. Die Verriegelung des hydraulischen Antriebs über die Sperre des Hydraulikkreislaufs ist als eine Schutzmaßnahme gegen Risiken durch herabfallende Gegenstände bei Wartungsarbeiten nutzbar. Bisher ist es zur Sicherung von Wartungsarbeiten erforderlich, die Haspel mit den Haspeltragarmen in die oberste Position zu fahren, um dann mechanische Verriegelungen an jedem einzelnen Haspeltragarm einzulegen, damit die Haspel gegen ein ungewolltes Herabfallen gesichert ist. Wenn die Wartungsarbeiten beendet sind, müssen alle mechanischen Riegel wieder entfernt werden. Das ist mit einem erheblichen Zeitaufwand verbunden, weil der Fahrer mehrfach um das gesamte Schneidwerk herumlaufen und an verschiedenen Positionen Riegel einlegen und danach wieder herausnehmen muss. Solche Wartungsarbeiten können mehrmals täglich notwendig sein, beispielsweise, um abgebrochene Messerklingen auszuwechseln oder Verstopfungen im Schneidwerk zu beseitigen. Der erhebliche Zeitaufwand und der damit einhergehende Verlust an Maschineneffizienz bergen die Gefahr in sich, dass Nutzer der Maschine bei Wartungsarbeiten auf die mechanischen Sicherungen verzichten, weil ihnen diese zu aufwendig erscheinen. Die hydraulische Verriegelung sieht nun vor, über ein Hydraulikventil die Hydraulikleitungen vom und/oder zum Verstellantrieb in Gestalt eines Hydraulikzylinders zu sperren. Sind die Hydraulikleitungen und -zylinder dicht, kann sich ein hydraulischer Verstellantrieb nicht mehr bewegen, wenn der Durchfluss von Hydraulikflüssigkeit im Hydraulikventil gesperrt worden ist. Bei den Hydraulikventilen kann es sich um elektrisch angesteuerte Ventile handeln, die bei einer Unterbrechung der Stromzufuhr durch eine mechanische Federrückstellung zwangsläufig in eine Schließstellung fahren. Die Hydraulikventile können durch das Betätigen eines Sicherheitsschalters von der Stromzufuhr unterbrochen werden, so dass es zur Sicherung gegen Risiken aus schwebenden Lasten reicht, wenn der Fahrer der Erntemaschine zu Beginn einer Wartungsarbeit auf den Sicherheitsschalter drückt, mit dem die elektrische Versorgung unterbrochen wird, um die Haspel gegen Gefahren durch schwebende Lasten zu sichern. Das bedeutet für den Fahrer eine erhebliche Zeitersparnis. Die Verriegelung kann er wieder aufheben, indem er mit dem Sicherheitsschalter die Stromversorgung der Hydraulikventile wieder herstellt. Es ist nicht mehr erforderlich, zu jedem einzelnen Haspeltragarm hinzugehen und dort mechanische Sicherungen anzubringen und wieder zu entfernen. Es genügt die Betätigung eines einzigen Sicherheitsschalters, was im Vorbeigehen an der Maschine erledigt werden kann, wenn der Sicherheitsschalter günstig platziert ist. Die schnelle und unkomplizierte Ein- und Ausschaltung der Sicherung macht es wahrscheinlicher, dass die Sicherung im Bedarfsfall auch aktiviert wird.

Nach einer Ausgestaltung der Erfindung ist der Verstellantrieb als hydraulischer Antrieb ausgebildet, bei dem eine Hubbegrenzung eines oder mehrerer Hydraulikzylinder durch eine elektrische Ansteuerung von die Hubbegrenzung schaffenden Hydraulikventilen aktivierbar ist. Eine Hubbegrenzung für die Haspel ist sinnvoll, um sicherzustellen, dass die an die Haspel angebauten Haspelzinken bei einer tiefen Absenkung der Haspel nicht in den Wirkbereich der Messerklingen des Messerbalkens geraten. Je nachdem, wie flexibel der Messerbalken am Schneidwerk gehalten ist, können verschiedene Abstandsmaße sinnvoll sein. So kann bei einem starr gehaltenen Messerbalken ein Abstand der Haspelzinkenspitzen von 50 mm zum Messerbalken als angemessen angesehen werden, um das Risiko auszuschließen, dass die Haspelzinkenspitzen in den Messerbalken geraten könnten und abgeschnitten werden oder Messerklingen abbrechen. Ist der Messerbalken jedoch an höhenbeweglichen Schwingen gehalten, damit sich der Messerbalken besser einer Bodenkontur anpassen kann, kann ein Mindestabstand von beispielweise 200 mm sinnvoll sein. Je nachdem, in welchem Modus das Schneidwerk betrieben wird, können die Hydraulikventile in Abhängigkeit vom ausgewählten Betriebsmodus elektrisch so geschaltet und angesteuert sein, dass jeweils die zum aktuellen Betriebsmodus passende Hubbegrenzung eingeschaltet ist. Die Hubbegrenzung kann über eine maschineneigene oder erntemaschinenseitige Software automatisiert oder durch eine Bedienereingabe aktiviert werden.

Nach einer Ausgestaltung der Erfindung weist der Verstellantrieb elektrisch oder pneumatisch betriebene Stellmotoren auf. Vorstehend und in der nachfolgenden gegenständlichen Beschreibung ist beschrieben, dass der Verstellantrieb hydraulische Stellmotoren wie beispielsweise Hydraulikzylinder aufweisen kann, die heute in der Landtechnik als motorische Antriebe gebräuchlich sind. Es ist aber auch möglich, anstelle von hydraulischen Antrieben elektrische oder pneumatische Antriebe einzusetzen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von schräg vorne auf ein Schneidwerk,
- Fig. 2:: eine Ansicht von schräg vorne auf ein Tragwerk ohne Haspelteile,
- Fig. 3:: das in Fig. 2 gezeigte Tragwerk ohne Zwischenwelle aus einer anderen Perspektive, und
- Fig. 4:: eine Detailansicht auf eine Seitenwand des Schneidwerks.

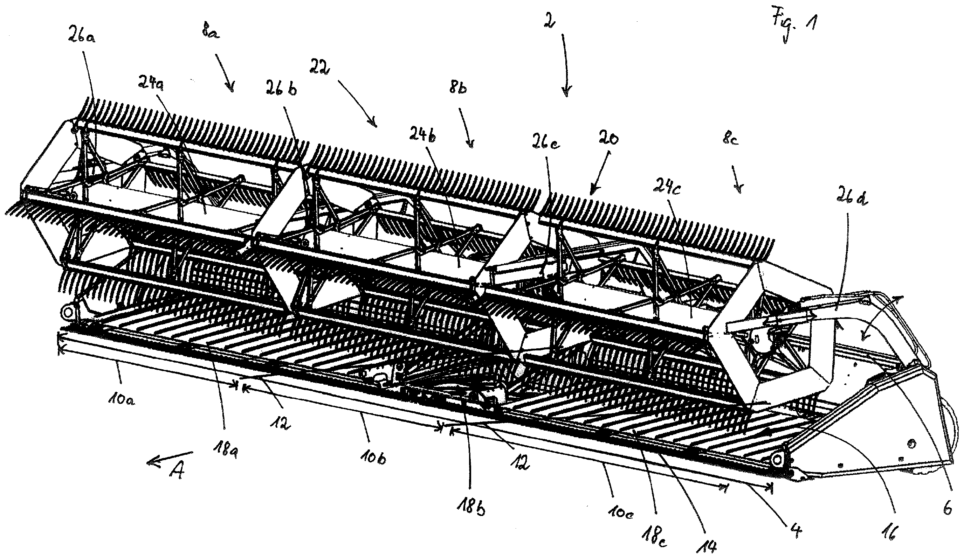

In Fig. 1 ist eine Ansicht von schräg vorne auf ein Schneidwerk 2 gezeigt. Das Schneidwerk 2 verfügt über eine Arbeitsbreite 4. Das Schneidwerk 2 besteht aus einem Rahmen 6, der aus drei Rahmenteilen 8a, 8b, 8c gebildet ist. Jedes Rahmenteil 8a, 8b, 8c deckt eine zugehörige Teilarbeitsbreite 10a, 10b, 10c ab. Die beiden äußeren Rahmenteile 8a, 8c sind im Verhältnis zum mittigen Rahmenteil 8b um die Achsen 12 schwenkbar, die sich in Arbeitsrichtung A des Schneidwerks 2 erstrecken.

An der Vorderseite des Schneidwerks 2 ist ein Messerbalken als Schneidelement 14 angebracht. Der Messerbalken ist oszillierend angetrieben und verfügt über eine Anzahl von Messerklingen, die das auf dem Feld stehende Erntegut abschneiden. Bei der Vorfahrt der Erntemaschine in den stehenden Bestand des Ernteguts fällt das geschnittene Erntegut auf die Förderflächen 16 im Schneidwerk 2. Mit Förderorganen 18 - im Ausführungsbeispiel die beiden äußeren Bandförderer 18a, 18c, die das geschnittene Erntegut quer zur Arbeitsrichtung in die Mitte des Schneidwerks 2 befördern, und der Bandförderer 18b, der das im mittleren Bereich des Schneidwerks 2 angesammelte Erntegut nach hinten abfördert - wird das Erntegut von den Schneidelementen 14 zur Abgabestelle 20 befördert. An der Abgabestelle 20 wird das geschnittene Erntegut an die Erntemaschine übergeben.

Damit die Halme des Ernteguts beim Schnitt gut in das Schneidelement 14 einlaufen, nicht seitlich wegfallen und nach dem Schnitt gut auf der Förderfläche abgelegt werden, befindet sich oberhalb des Schneidelements 14 eine rotierend antreibbare Haspel 22. Im Ausführungsbeispiel ist die Haspel 22 dreigeteilt in die Haspelteile 24a, 24b, 24c. Im Bereich der Trennstellen zwischen den Haspelteilen 24a, 24b, 24c befinden sich die Haspeltragarme 26b, 26c. Die Haspel 22 legt sich bei ihrer Rotation an die Getreidestängel an und wirft diese entgegen der Fahrtrichtung A auf die Förderfläche 16.

Die Haspelteile 24a, 24b, 24c sind von den Haspeltragarmen 26a, 26b, 26c, 26d gehalten. Das mittig angeordnete Haspelteil 24b ist dabei von den Haspeltragarmen 26b, 26c gehalten, die auch die nach innen weisenden Wellenstummel der Haspelwellen der äußeren Haspelteile 24a, 24c halten. Die Haspeltragarme 26b, 26c tragen also jeweils die Wellenstummel von zwei Haspelteilen, während die äußeren Haspeltragarme 26a, 26d nur die nach außen weisenden Wellenstummel der äußeren Haspelteile 24a, 24c tragen. Die Haspeltragarme 26 sind in Richtung des Doppelpfeils in vertikaler Richtung verstellbar, woraus sich eine unterschiedliche Höhenlage der Haspel 22 ergibt. Die Haspelteile 24a, 24b, 24c sind zusätzlich noch in horizontaler Richtung verstellbar, was ebenfalls durch einen entsprechenden Doppelpfeil angedeutet ist.

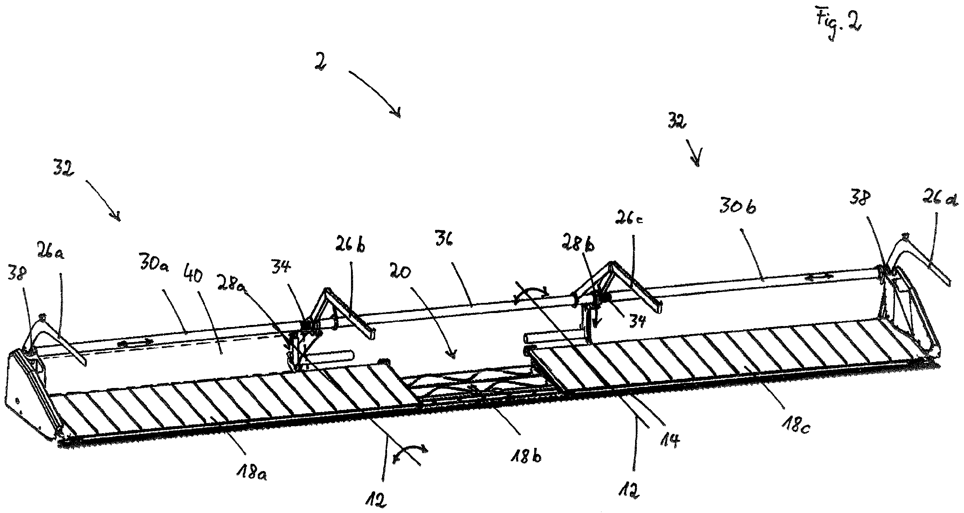

In Fig. 2 ist eine Ansicht von schräg vorne auf ein Schneidwerk 2 ohne den Rahmen 6, die Haspelteile 24a, 24b, 24c und sonstige Bauteile gezeigt. In dieser reduzierten Darstellung ist gut erkennbar, dass die Haspeltragarme 26a, 26b über den Verstellantrieb 28a und die Haspeltragarme 26c, 26d über den Verstellantrieb 28b verstellbar sind. Die Haspeltragarme 26a, 26b sind über die Torsionswelle 30a miteinander verbunden, während die Haspeltragarme 26c, 26d über die Torsionswelle 30b miteinander verbunden sind. Eine Verstellbewegung, die einen Verstellantrieb 28a, 28b auf einen Haspeltragarm 26b, 26c ausübt, wird über die Torsionswellen 30a, 30b auch auf die Haspeltragarme 26a, 26d übertragen. Die Haspeltragarme 26a, 26b mit der Torsionswelle 30a sowie die Haspeltragarme 26c, 26d mit der Torsionswelle 30d bilden jeweils ein Haspeltragwerk, um die Haspelteile 24a und 24c zu halten. Die Haspeltragarme 26b, 26c können zusätzlich noch das mittlere Haspelteil 24b halten. Das mittlere Haspelteil 24b wird dann zusammen mit den Haspelteilen 24a, 24c verschwenkt, je nachdem, wie sich die Haspeltragarme 24b, 24c bewegen.

Da die Rahmenteile 8a, 8d um das mittlere Rahmenteil 8b um die Achsen 12 schwenkbar sind, und da die Torsionswellen 30a, 30b in vertikaler Richtung beabstandet zu den Achsen 12 angeordnet sind, ergeben sich bei entsprechenden Schwenkbewegungen an den äußeren Enden der Torsionswellen 30a, 30b Längendifferenzen im Verhältnis zu den äußeren Enden der zugehörigen Rahmenteile 8a, 8c, die durch jeweilige Doppelpfeile angedeutet sind. Die Torsionswellen 30a, 30b sind an fixen Lagerpunkten 34 gehalten und abgestützt. Im Ausführungsbeispiel sind die fixen Lagerpunkte 34 als Kreuzgelenke ausgebildet, über die die Torsionswellen 30a, 30b mit einer Zwischenwelle 36 drehfest miteinander verbunden sind. Um Relativbewegungen zwischen den Rahmenteilen 8a, 8c und den Torsionswellen 30a, 30b in axialer Richtung der Torsionswellen 30a, 30b ausgleichen zu können, sind die Torsionswellen 30a, 30b an ihren äußeren Enden über Gleitlager 38 mit den Rahmenteilen 8a, 8c verbunden. Die Torsionswellen 30a, 30b können also in ihrer axialen Richtung in den Gleitlagern 38 gleiten.

Aus Fig. 2 ist ersichtlich, dass an der Torsionswelle 30a auch eine in gestrichelten Linien dargestellte Rückwand 40 befestigt werden kann.

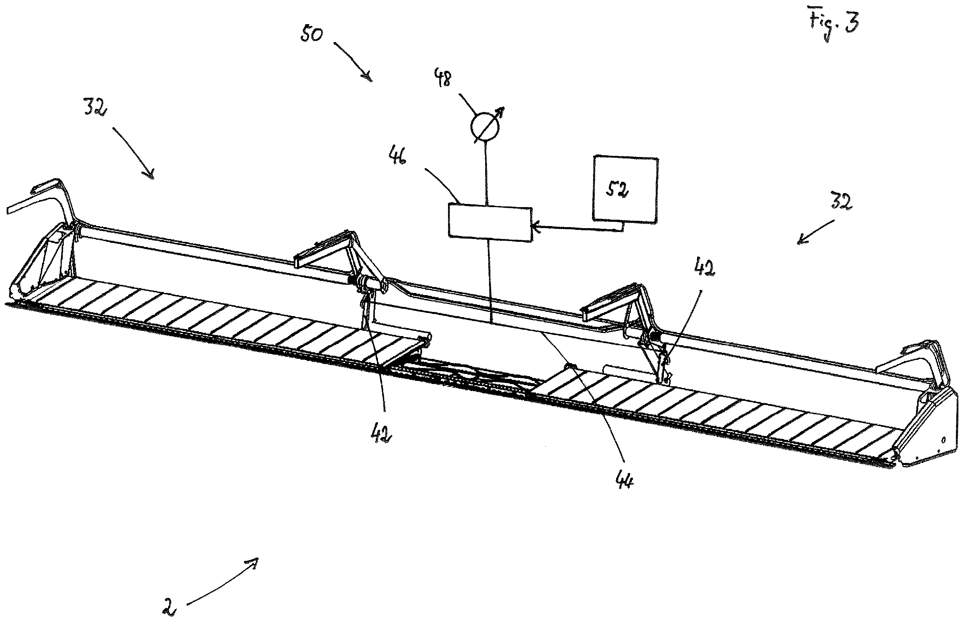

In Fig. 3 ist das in Fig. 2 vereinfacht dargestellte Schneidwerk 2 mit Tragwerken 32 gezeigt, die nicht durch eine Zwischenwelle 36 verbunden sind. In der in Figur 3 gezeigten Ansicht sind allerdings die Hydraulikzylinder 42 erkennbar, die im Ausführungsbeispiel die jeweiligen Verstellantriebe 28a, 28b, bilden. Die Hydraulikzylinder 42 bilden zusammen mit den Hydraulikleitungen 44, dem Hydraulikventil 46 und der Hydraulikpumpe 48 einen hydraulischen Antrieb 50. In Fig. 3 sind die Hydraulikleitungen 44 aus Gründen der zeichnerischen Vereinfachung nur als ein Strich dargestellt Es versteht sich aber, dass die Hydraulikleitungen 44 in einem Hydraulikkreislauf mit entsprechenden Vor- und Rücklaufleitungen und entsprechend ausgestalteten Hydraulikventilen 46 ausgestaltet sind.

Über eine Hydraulikventil 46 kann der Hydraulikkreislauf zu den Hydraulikzylindern 42 beispielsweise vollständig verriegelt werden. Das ist über die Verwendung eines 2/2-Wegeventils möglich. In der Schließstellung des 2/2-Wegeventils blockiert es jeglichen Durchfluss von Hydraulikflüssigkeit, so dass die Hydraulikzylinder 42 in der aktuellen Ausfahrstellung blockiert sind. Der Hydraulikkreislauf fungiert auf diese Weise als eine statische Sicherung der schwebenden Last aus der Haspel 22, unter der dann Wartungsarbeiten vorgenommen werden können, wie beispielsweise der Austausch von Messerklingen an dem Schneidelement 14 oder die Beseitigung von Materialansammlungen auf den Förderflächen 16 oder an der Förderorganen 18. Das 2/2-Wegeventil kann beispielsweise elektrisch angesteuert werden, wie beispielsweise von einer Bedienelektronik 52. Die Bedienelektronik 52 kann als ein Schalter ausgebildet sein, mit der eine einfache Ein-/Aus-Schaltung möglich ist, oder es handelt sich um eine komplexere Bedienelektronik 52, bei der softwaregestützte Bedieneingaben über Taster oder Touch-Bedienflächen an einem Bedienfeld möglich sind.

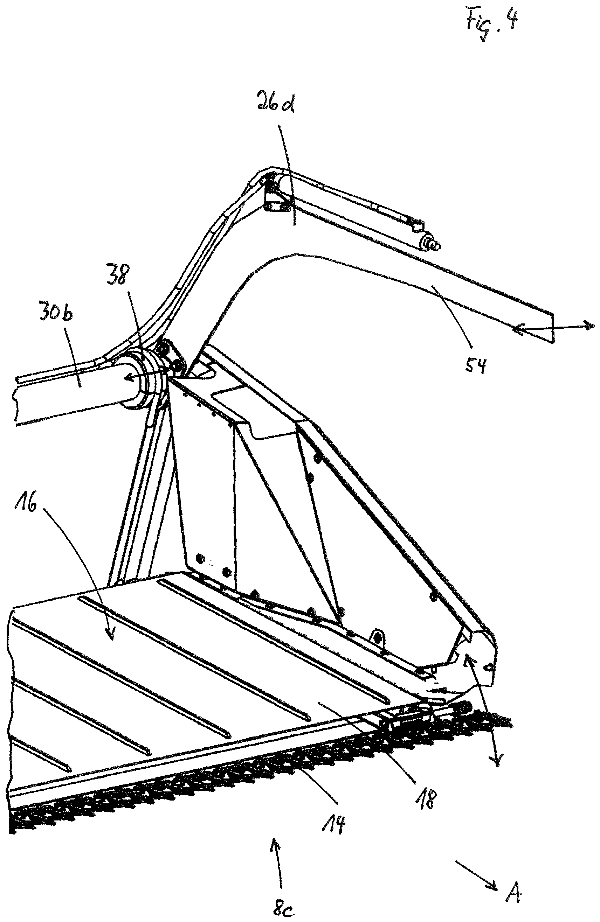

In Fig. 4 ist eine Detailansicht auf das äußere Ende des Rahmenteils 8c gezeigt. Der Haspeltragarm 26d ist als ein flaches Stahlblech ausgebildet, das ein elastisch federndes Element 54 bildet, das an seiner äußeren Spitze in Richtung des dort eingezeichneten Doppelpfeils quer zur Arbeitsrichtung A elastisch federn kann. Durch das elastisch federnde Element 54 ist es möglich, dass das Haspelteil 24c wie auch die Torsionswelle 30d ihre Lage relativ zum Rahmenteil 8c verändern können. Die Schwenkbewegung des Rahmenteils 8c ist in Fig. 4 ebenfalls durch einen Doppelpfeil angedeutet.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 2: Schneidwerk
- 4: Arbeitsbreite
- 6: Rahmen
- 8: Rahmenteil
- 10: Teilarbeitsbreite
- 12: Achse
- 14: Schneidelement
- 16: Förderfläche
- 18: Förderorgan
- 20: Abgabestelle
- 22: Haspel
- 24: Haspelteil
- 26: Haspeltragarm
- 28: Verstellantrieb
- 30: Torsionswelle
- 32: Haspeltragwerk
- 34: Lagerpunkt
- 36: Zwischenwelle
- 38: Gleitlager
- 40: Rückwand
- 42: Hydraulikzylinder
- 44: Hydraulikleitung
- 46: Hydraulikventil
- 48: Pumpe
- 50: hydraulischer Antrieb
- 52: Bedienelektronik
- 54: elastisch federndes Element

## Patentansprüche

1. Schneidwerk (2) zum Anbau an eine Erntemaschine mit einem sich im Wesentlichen über die Arbeitsbreite (4) des Schneidwerks (2) erstreckenden Rahmen (6), der aus mehreren Rahmenteilen (8a, 8b, 8c) zusammengesetzt ist, die sich jeweils über eine Teilarbeitsbreite (10a, 10b, 10c) erstrecken und die gelenkig um eine sich zumindest annähernd in Arbeitsrichtung (A) des Schneidwerks (2) erstreckende Achse (12) miteinander verbunden sind, an der Vorderseite des Schneidwerks (2) angeordneten und mit dem Rahmen (6) verbundenen Schneidelementen (14), Förderflächen (16) und Förderorganen (18) zur Abförderung des geschnittenen Ernteguts von den Schneidelementen (14) zu einer Abgabestelle (20), zumindest ein Förderorgan (18) ist eine mehrteilige Haspel (22), deren Haspelteile (24a, 24b, 24c) sich jeweils quer zur Arbeitsrichtung (A) des Schneidwerks (2) über zumindest eine Teilarbeitsbreite (10a, 10b, 10c) des Schneidwerks (2) erstrecken, und die Haspelteile (24a, 24b, 24c) sind von schwenkbeweglich am Rahmen (6) oder Rahmenteilen (8a, 8b, 8c) befestigten Haspeltragarmen (26a, 26b, 26c, 26d) gehalten, die über Verstellantriebe zur Höhenverstellung der Haspelteile (24a, 24b, 24c) höhenverstellbar sind, zumindest zwei ein Haspelteil (24a, 24b, 24c) tragende Haspeltragarme (26) über eine Torsionswelle (30a, 30b) drehfest miteinander verbunden sind, die Haspeltragarme (26a, 26b, 26c, 26d) und die Torsionswelle (30a, 30b) ein Haspeltragwerk (32) bilden, das Haspeltragwerk (32) mit einem Verstellantrieb (28a, 28b) verbunden ist, der an einem oder mehreren Haspeltragarmen (26a, 26b, 26c, 26d) und/oder der Torsionswelle (30a, 30b) angreift und bei Verstellbewegungen des ferngesteuerten Verstellantriebs (28a, 28b) das zugehörige Haspelteil (24a, 24b, 24c) anhebt oder absenkt, **dadurch gekennzeichnet, dass** die Torsionswelle (30a, 30b) auf einer ersten Seite einen in axialer Richtung der Torsionswelle (30a, 30b) fixen Lagerpunkt (34) aufweist, der als Kreuzgelenk ausgebildet ist, und auf einer zweiten Seite in einem Gleitlager (38) gelagert ist, das eine Schubbewegung zwischen der Torsionswelle und dem Rahmenteil zulässt, so dass sich die Torsionswelle in axialer Richtung im Verhältnis zu dem Rahmenteil, dem das Haspelteil zumindest teilweise zugeordnet ist, bewegen kann.

2. Schneidwerk (2) nach Anspruch 1, **dadurch gekennzeichnet, dass** ein oder mehrere innen gelegene Haspeltragarme (26a, 26b, 26c, 26d) mehrere Haspelteile (24a, 24b, 24c) tragen.

3. Schneidwerk (2) nach Anspruch 1 oder 2, **dadurch gekennzeichnet, dass** ein Verstellantrieb (28a, 28b) an einem innenliegenden Haspeltragarm (26a, 26b, 26c, 26d) angreift.

4. Schneidwerk (2) nach einem der vorhergehenden Ansprüche, **dadurch gekennzeichnet, dass** einer oder mehrere Haspeltragarme (26a, 26b, 26c, 26d) als ein entlang der Arbeitsbreite (4) elastisch federndes Element (54) ausgebildet sind.

5. Schneidwerk (2) nach einem der vorhergehenden Ansprüche, **dadurch gekennzeichnet, dass** die Torsionswelle (30a, 30b) als Halterung zur Befestigung der Rückwand (40) des Schneidwerks (2) dient.

6. Schneidwerk (2) nach einem der vorhergehenden Ansprüche, **dadurch gekennzeichnet, dass** die Haspel drei Haspelteile (24a, 24b, 24c) aufweist, von denen die beiden äußeren Haspelteile (24 a, 24c) über ein jeweiliges Haspeltragwerk (32) abgestützt sind, zumindest eines der beiden Haspeltragwerke (32) mit einem Verstellantrieb (28a, 28b) in seiner Höhe verstellbar ist und die beiden Haspeltragwerke (32) über eine drehfest mit diesen verbundene Zwischenwelle (36) in ihren Verstellbewegungen miteinander synchronisiert sind.

7. Schneidwerk (2) nach einem der vorhergehenden Ansprüche, **dadurch gekennzeichnet, dass** der Verstellantrieb (28a, 28b) als hydraulischer Antrieb (50) ausgebildet ist, dessen Hydraulikkreislauf über Hydraulikventile (46) verriegelbar ist.

8. Schneidwerk (2) nach einem der vorhergehenden Ansprüche, **dadurch gekennzeichnet, dass** der Verstellantrieb (28a, 28b) als hydraulischer Antrieb (50) ausgebildet ist, bei dem eine Hubbegrenzung eines oder mehrerer Hydraulikzylinder (42) durch eine elektrische Ansteuerung von die Hubbegrenzung schaffenden Hydraulikventilen (46) aktivierbar ist.

9. Schneidwerk (2) nach einem der vorhergehenden Ansprüche 1 bis 6, **dadurch gekennzeichnet, dass** der Verstellantrieb (28a, 28b) elektrisch oder pneumatisch betriebene Stellmotoren aufweist.

## Claims

1. Cutting device (2) for attachment to a harvester with a frame (6) extending substantially over the working width (4) of the cutting device (2) and comprising several frame parts (8a, 8b, 8c) which each extend over a partial working width (10a, 10b, 10c) and which are connected to one another for articulated movement about an axis (12) extending at least approximately in the working direction (A) of the cutting device (2), with cutting elements (14) arranged on the front side of the cutting device (2) and connected to the frame (6), with conveying surfaces (16) and conveying members (18) for conveying the cut crop from the cutting elements (14) to a delivery point (20), at least one conveying member (18) is a multi-part reel (22) whose reel parts (24a, 24b, 24c) each extend transversely to the working direction (A) of the cutting device (2) over at least a partial working width (10a, 10b, 10c) of the cutting device (2), and the reel parts (24a, 24b, 24c) are held by reel support arms (26a, 26b, 26c, 26d) which are attached for pivotal movement on the frame (6) or frame parts (8a, 8b, 8c) and which are adjustable in height via adjustment drives for adjusting the height of the reel parts (24a, 24b, 24c), at least two reel support arms (26) supporting a reel part (24a, 24b, 24c) are connected rotationally secured to one another via a torsion shaft (30a, 30b), the reel support arms (26a, 26b, 26c, 26d) and the torsion shaft (30a, 30b) form a reel support unit (32), the reel support unit (32) is connected to an adjustment drive (28a, 28b) which engages on one or more reel support arms (26a, 26b, 26c, 26d) and/or the torsion shaft (30a, 30b) and during adjusting movements of the remote-controlled adjustment drive (28a, 28b) the associated the associated reel part (24a, 24b, 24c) is raised or lowered, **characterized in that** the torsion shaft (30a, 30b) on a first side has a fixed bearing point (34) in the axial direction of the torsion shaft (30a, 30b) which is formed as a universal joint, and on a second side is mounted in a plain bearing (38) which permits a pushing movement between the torsion shaft and the frame part so that the torsion shaft can move in the axial direction in relation to the frame part with which the reel part is associated at least in part.

2. Cutting device (2) according to Claim 1 **characterized in that** one of the inwardly placed reel support arms (26a, 26b, 26c, 26d) support several reel parts (24a, 24b, 24c).

3. Cutting device (2) according to Claim 1 or 2 **characterized in that** an adjustment drive (28a, 28b) engages on an inner reel support arm (26a, 26b, 26c, 26d).

4. Cutting device (2) according to one of the preceding claims **characterized in that** one or more reel support arms (26a, 26b, 26c, 26d) is/are designed as an elastically resilient element (54) along the working width (4).

5. Cutting device (2) according to one of the preceding claims **characterized in that** the torsion shaft (30, 30b) serves as a holder for attaching the back wall (40) of the cutting device.

6. Cutting device (2) according to one of the preceding claims **characterized in that** the reel has three reel parts (24a, 24b, 24c) of which the two outer reel parts (24a, 24c) are supported by a reel support unit (32), at least one of the two reel support units (32) is adjustable in height by an adjustment drive (28a, 28b), and the two reel support units (32) are synchronized in their adjusting movements relative to one another by way of an intermediate shaft (36) which is connected rotationally secured thereto.

7. Cutting device (2) according to one of the preceding claims **characterized in that** the adjustment drive (28a, 28b) is formed as a hydraulic drive (50) whose hydraulic circuit can be locked by means of hydraulic valves (4).

8. Cutting device (2) according to one of the preceding claims **characterized in that** the adjustment drive (28a, 28b) is formed as a hydraulic drive (50) wherein a stroke restriction of one or more hydraulic cylinders (42) can be activated by an electric control of hydraulic valves (46) providing the stroke restriction.

9. Cutting device (2) according to one of the preceding claims 1 to 6 **characterized in that** the adjustment drive (28a, 28b) has electrically or pneumatically operated servo motors.

## Revendications

1. Dispositif de coupe (2) destiné à être monté sur une moissonneuse comportant un cadre (6) s'étendant essentiellement sur la largeur de travail (4) du dispositif de coupe (2), lequel cadre est composé de plusieurs parties de cadre (8a, 8b, 8c) qui s'étendent respectivement sur une largeur de travail partielle (10a, 10b, 10c) et qui sont reliées les unes aux autres de manière articulée autour d'un axe (12) s'étendant au moins approximativement dans la direction de travail (A) du dispositif de coupe (2), des éléments coupants (14) disposés sur la face avant du dispositif de coupe (2) et reliés au cadre (6), des surfaces de transport (16) et des éléments de transport (18) servant au transport du produit de récolte coupé à partir des éléments coupants (14) vers un point de distribution (20), au moins un élément de transport (18) est un rabatteur (22) en plusieurs parties, dont les parties de rabatteur (24a, 24b, 24c) s'étendent respectivement transversalement à la direction de travail (A) du dispositif de coupe (2) sur au moins une largeur de travail partielle (10a, 10b, 10c) du dispositif de coupe (2), et les parties de rabatteur (24a, 24b, 24c) sont retenues par des bras de support de rabatteur (26a, 26b, 26c, 26d) fixés de manière mobile en pivotement au cadre (6) ou à des parties de cadre (8a, 8b, 8c), lesquels bras sont réglables en hauteur par le biais d'entraînements de réglage pour le réglage en hauteur des parties de rabatteur (24a, 24b, 24c), au moins deux bras de support de rabatteur (26) supportant une partie de rabatteur (24a, 24b, 24c) sont reliés les uns aux autres de manière solidaire en rotation par le biais d'un arbre de torsion (30a, 30b), les bras de support de rabatteur (26a, 26b, 26c, 26d) et l'arbre de torsion (30a, 30b) forment une structure de support de rabatteur (32), la structure de support de rabatteur (32) est reliée à un entraînement de réglage (28a, 28b) qui vient en prise avec un ou plusieurs bras de support de rabatteur (26a, 26b, 26c, 26d) et/ou l'arbre de torsion (30a, 30b) et, lors de mouvements de réglage de l'entraînement de réglage (28a, 28b) commandé à distance, soulève ou abaisse la partie de rabatteur (24a, 24b, 24c) associée, **caractérisé en ce que** l'arbre de torsion (30a, 30b) présente, sur un premier côté, un point d'appui (34) fixe dans la direction axiale de l'arbre de torsion (30a, 30b), lequel point d'appui est réalisé sous forme de joint de cardan, et, sur un deuxième côté, est monté dans un palier lisse (38) qui autorise un mouvement de translation entre l'arbre de torsion et la partie de cadre, de sorte que l'arbre de torsion puisse se déplacer dans la direction axiale par rapport à la partie de cadre à laquelle la partie de rabatteur est associée au moins partiellement.

2. Dispositif de coupe (2) selon la revendication 1, **caractérisé en ce qu'**un ou plusieurs bras de support de rabatteur (26a, 26b, 26c, 26d) situés intérieurement supportent plusieurs parties de rabatteur (24a, 24b, 24c) .

3. Dispositif de coupe (2) selon la revendication 1 ou 2, **caractérisé en ce qu'**un entraînement de réglage (28a, 28b) vient en prise avec un bras de support de rabatteur (26a, 26b, 26c, 26d) intérieur.

4. Dispositif de coupe (2) selon l'une des revendications précédentes, **caractérisé en ce qu'**un ou plusieurs bras de support de rabatteur (26a, 26b, 26c, 26d) sont réalisés sous la forme d'un élément (54) élastiquement souple le long de la largeur de travail (4) .

5. Dispositif de coupe (2) selon l'une des revendications précédentes, **caractérisé en ce que** l'arbre de torsion (30a, 30b) sert de support pour la fixation de la paroi arrière (40) du dispositif de coupe (2).

6. Dispositif de coupe (2) selon l'une des revendications précédentes, **caractérisé en ce que** le rabatteur présente trois parties de rabatteur (24a, 24b, 24c), parmi lesquelles les deux parties de rabatteur extérieures (24a, 24c) sont supportées par le biais d'une structure de support de rabatteur (32) respective, au moins l'une des deux structures de support de rabatteur (32) est réglable en hauteur à l'aide d'un entraînement de réglage (28a, 28b) et les deux structures de support de rabatteur (32) sont synchronisées l'une avec l'autre en termes de leur mouvements de réglage par le biais d'un arbre intermédiaire (36) relié de manière solidaire en rotation à celles-ci.

7. Dispositif de coupe (2) selon l'une des revendications précédentes, **caractérisé en ce que** l'entraînement de réglage (28a, 28b) est réalisé sous forme d'entraînement hydraulique (50) dont le circuit hydraulique peut être bloqué par le biais de soupapes hydraulique (46).

8. Dispositif de coupe (2) selon l'une des revendications précédentes, **caractérisé en ce que** l'entraînement de réglage (28a, 28b) est réalisé sous forme d'entraînement hydraulique (50), dans lequel une limitation de course d'un ou plusieurs cylindres hydrauliques (42) peut être activée par une commande électrique de soupapes hydrauliques (46) réalisant la limitation de course.

9. Dispositif de coupe (2) selon l'une des revendications précédentes 1 à 6, **caractérisé en ce que** l'entraînement de réglage (28a, 28b) présente des servomoteurs à fonctionnement électrique ou pneumatique.
